# EUROPEAN PATENT SPECIFICATION

(11) **EP 0 390 237 B1**
(45) Date of publication and mention of the grant of the patent: **18.10.1995**
(21) Application number: 90200490.2
(22) Date of filing: 01.03.1990
(51) Int. Cl.: C08G 67/02

(54) **Polymers of carbon monoxide with cyclopentenes**
Polymere aus Kohlenmonoxid und Cyclopentenen
Polymères de monoxyde de carbon et de cyclopentenes

(30) Priority: 02.03.1989 NL 8900513
(43) Date of publication of application: 03.10.1990
(73) Proprietor: SHELL INTERNATIONALE RESEARCH MAATSCHAPPIJ B.V., 2596 HR Den Haag (NL)
(72) Inventor: Van Deursen, Josephus Hubertus, NL-1031 CM Amsterdam (NL); Van Doorn, Johannes Adrianus, NL-1031 CM Amsterdam (NL); Drent, Eit, NL-1031 CM Amsterdam (NL); Wong, Pui Kwan, NL-2596 HR 's Gravenhage (NL)

(56) References cited:
- EP-A- 0 121 965
- EP-A- 0 229 408
- EP-A- 0 315 279
- DATABASE CHEMICAL ABSTRACTS, (HOST:STN), vol. 108, no. 15, 1988, Columbus, OH (US); no. 131037p

## Description

The invention relates to novel polymers of carbon monoxide with one or more cyclopentenes.

It is known that linear polymers of carbon monoxide with one or more alpha-olefins, in which the units originating in carbon monoxide on the one hand, and the units originating in the applied alpha-olefins on the other hand, occur in alternating order, can be prepared by contacting the monomers with a catalyst composition on the basis of
a) a palladium compound,
b) an anion of an acid with a pKa of less than 2, and
c) a phosphorus, sulphur or nitrogen bidentate ligand, which bidentate ligand meets certain structural requirements.

Eligible phosphorus bidentate ligands are compounds of the general formula (R¹)₂P-R-P(R¹)₂, wherein R¹ is an optionally polar-substituted aromatic hydrocarbyl group and R is a bivalent organic bridging group containing at least two carbon atoms in the bridge. Examples of such phosphorus bidentate ligands are 2,2-dimethyl-1,3-bis(diphenylphosphino)propane and 1,3-bis[bis(2-methoxyphenyl)phosphino]propane.

Eligible sulphur bidentate ligands are compounds of the general formula R²S-R-SR³, in which R² is an optionally polar-substituted hydrocarbyl group and R has the meaning given hereinbefore. Examples of such sulphur bidentate ligands are 1,2-bis(ethylthio)ethane and cis-1,2-bis(benzylthio)ethene.

Eligible nitrogen bidentate ligands are compounds of the general formula 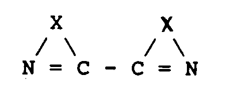
wherein X is an organic bridging group containing three or four atoms in the bridge at least two of which are carbon atoms. Examples of such nitrogen bidentate ligands are 2,2′-bipyridine and 1,10-phenanthroline.

The afore-mentioned catalyst compositions are excellently suitable both for preparing linear alternating copolymers of carbon monoxide with a single alpha-olefin, such as ethene, propene, butene-1 or octene-1 and for preparing linear terpolymers of carbon monoxide with two alpha-olefins, such as ethene and propene or ethene and octene-1. By taking up certain organic oxidants in the afore-mentioned catalyst compositions, their polymerizing activity can be considerably enhanced. Examples of organic oxidants that are suitable for the purpose are 1,4-benzoquinone, 1,4-naphthoquinone, nitrobenzene, para-chloronitrobenzene and ortho-dinitrobenzene.

The Applicant has carried out an investigation into whether the afore-mentioned catalyst compositions can be considered for use in the preparation of linear alternating polymers of carbon monoxide with cyclopentene and/or with one or more cyclopentenes which carry an alkyl substituent in the 3, 4 and/or 5 position. The investigation has shown that the afore-mentioned catalyst compositions as such cannot be used for this purpose. Neither the catalyst compositions containing a phosphorus bidentate ligand nor those containing a sulphur or nitrogen bidentate ligand did produce any appreciable degree of polymerization. This situation could not be improved by incorporating the afore-mentioned polymerization promoters.

Further investigation carried out by the Applicant into this subject has now surprisingly shown that the afore-mentioned catalyst compositions can be made suited to the preparation of linear alternating polymers of carbon monoxide with one or more cyclopentenes which are optionally alkyl-substituted in the 3, 4 and/or 5 position, by introducing a modification in their compositions.

Both for the catalyst compositions containing a phosphorus bidentate ligand of the general formula (R¹)₂P-R-P(R¹)₂ and for the catalyst compositions containing a sulphur or a nitrogen bidentate ligand it was found that to this end, a compound should be taken up in the catalyst compositions as component d) in which there occurs a benzene ring substituted with at least two nitro groups in a meta position relative to one another. For the catalyst compositions containing a phosphorus bidentate ligand of the general formula (R¹)₂P-R-P(R¹)₂ it was further found that the desired object can also be attained by replacing the bidentate ligand with a phosphorus bidentate ligand of the general formula (R³)₂P-R-P(R³)₂, wherein R³ represents an optionally polar-substituted aliphatic hydrocarbyl group and R has the meaning given hereinbefore.

On the basis of the configurations of the asymmetrical carbon atoms present in the polymer chains, the linear alternating copolymers of carbon monoxide with cyclopentenes can be divided into stereo-regular and stereo-irregular copolymers. If the configuration of the asymmetrical carbon atoms in the polymer chains is random, the copolymers are referred to as stereo-irregular. If this configuration is substantially regular, the copolymers are referred to as stereo-regular. The latter copolymers are obtained when during the copolymerization of carbon monoxide with cyclopentene, use is made of a catalyst composition containing a phosphorus bidentate ligand of the general formula (R³)₂P-R-P(R³)₂.

Linear alternating polymers of carbon monoxide with one or more cyclopentenes which are optionally alkyl-substituted in the 3, 4 and/or 5 position are novel. Naturally, this also holds for the stereo-regular carbon monoxide/cyclopentene copolymers.

The present patent application therefore relates to novel polymers of carbon monoxide with one or more cyclopentenes, which polymers can be defined as follows
a) they are obtained by polymerizing carbon monoxide with one or more cyclopentenes which are optionally alkyl-substituted in the 3, 4 and/or 5 positions,
b) they have a linear structure, and
c) in the polymers, the units originating from carbon monoxide on the one hand, and the units originating from cyclopentenes on the other hand, occur in alternating order.

The patent application further relates to processes for the preparation of these polymers.

If the polymers of the invention are based on alkyl-substituted cyclopentenes, the alkyl groups present therein preferably do not contain more than 4 carbon atoms. An example of a suitable dialkylcyclopentene is 3,5-dimethylcyclopentene. When the polymers are based on alkyl-substituted cyclopentenes, preference is further given to cyclopentenes which contain only one alkyl group, such as 3-methylcyclopentene. Further, there is a preference for polymers of carbon monoxide with only a single optionally alkyl-substituted cyclopentene. Special preference is given to copolymers of carbon monoxide with cyclopentene.

The polymers of the invention may be prepared by contacting the monomers with a solution of a catalyst composition in a diluent, which catalyst composition is based upon:
a) a palladium compound,
b) an anion of an acid with a pKa of less than 2, and
c) either (1) a phosphorus bidentate ligand of the general formula (R³)₂P-R-P(R³)₂, or
   (2) a phosphorus bidentate ligand of the general formula (R¹)₂P-R-P(R¹)₂, or
   (3) a sulphur bidentate ligand of the general formula R²S-R-SR², or
   (4) a nitrogen bidentate ligand of the general formula 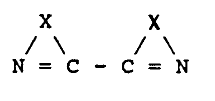 with the proviso that when a bidentate ligand chosen from the groups (2)-(4) is used as component c), the catalyst composition should in addition include as component d) a compound which has a benzene ring substituted with at least two nitro groups in a mutual meta position.

The preparation of the polymers of the invention is preferably carried out at a temperature of from 20 to 120 °C, an overall pressure of from 5 to 150 bar and by employing such a quantity of catalyst composition as to contain 10⁻⁷ to 10⁻³ mol of palladium per mol of cycloolefin to be polymerized. Special preference is given to a preparation carried out at a temperature in the range of from 30 to 100 °C, an overall pressure in the range of from 20 to 100 bar and by employing such a quantity of catalyst composition as to contain 10⁻⁶ to 10⁻⁴ mol of palladium per mol of cycloolefin to be polymerized. The molar ratio of the cycloolefins relative to carbon monoxide in the mixture to be polymerized is preferably from 10:1 to 1:10 and in particular from 5:1 to 1:5. Very suitable diluents are lower aliphatic alcohols, such as methanol and mixtures thereof with cyclic ethers, such as tetrahydrofuran.

The palladium compound employed in the catalyst compositions as component a) is preferably a palladium salt of a carboxylic acid, and palladium acetate in particular. Examples of suitable acids with a pKa of less than 2 (determined in aqueous solution at 18 °C) are mineral acids, such as perchloric acid, sulphonic acids, such as para-toluenesulphonic acid, and halogen carboxylic acids, such as trifluoroacetic acid. In the catalyst compositions, component b) may be taken up in the form of an acid and/or in the form of a salt. A very suitable acid is para-toluenesulphonic acid and a very suitable salt is nickel perchlorate. Preferably, the quantity of component b) present in the catalyst compositions is from 0.5 to 100 and in particular from 1 to 50 mol per mol of palladium.

If the polymers of the invention are prepared by using a catalyst composition containing as component c) a phosphorus bidentate ligand of the general formula (R¹)₂P-R-P(R¹)₂ or (R³)₂P-R-P(R³)₂, preference is given to compounds in which the optionally polar-substituted hydrocarbyl groups R¹ and R³ do not contain more than 10 carbon atoms and in particular to compounds in which R³ is an alkyl group or in which R¹ is a phenyl group which is optionally substituted with an alkoxy group in a position ortho to the phosphorus atom, such as an ortho-methoxyphenyl group. As regards the bridging group R present in the phosphorus bidentate ligands, preference is given to bridging groups containing three atoms in the bridge at least two of which are carbon atoms. Examples of suitable bridging groups R are the -CH₂-CH₂-CH₂- group, the -CH₂-C(CH₃)₂-CH₂- group and the -CH₂-Si(CH₃)₂-CH₂- group. Compounds that can be very suitably used as components c) in the present catalyst compositions are 1,3-bis(diphenylphosphino)propane, 1,3-bis[bis(2-methoxyphenyl)phosphino]propane, and 1,3-bis(di-n-butylphosphino)propane.

If the polymers of the invention are prepared by using a catalyst composition containing as component c) a sulphur bidentate ligand of the general formula R²S-R-SR², preference is given to compounds in which the bridging group R contains only two carbon atoms in the bridge. A compound that is very suitable for use as component c) in the present catalyst compositions is 1,2-bis(ethylthio)ethane.

If the polymers of the invention are prepared by using a catalyst composition containing as component c) a nitrogen bidentate ligand of the general formula 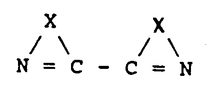
preference is given to 2,2′-bipyridine and 1,10-phenanthroline.

The quantity of component c) present in the catalyst composition is preferably 0.5-100 and in particular 0.75-50 mol per mol of palladium.

If in the preparation of the polymers of the invention it is desired to use a catalyst composition containing as component c) a bidentate ligand chosen from one of the groups (2)-(4) mentioned earlier, then the catalyst composition should in addition include as component d) a compound which has a benzene ring substituted with at least two nitro groups in a mutual meta position. Very favourable results have been obtained with 1,3-dinitrobenzene, 2,4-dinitrotoluene and 2,6-dinitrotoluene as the component d).

If the polymers of the invention are prepared by using a catalyst composition containing as component c) a phosphorus bidentate ligand chosen from the afore-mentioned group (1), then it is preferred to incorporate an organic oxidant as component d) for use as a polymerization promoter. Examples of organic oxidants suitable for the purpose are 1,4-benzoquinone, 1,4-naphthoquinone, nitrobenzene, para-chloronitrobenzene and ortho-dinitrobenzene. Any one of the meta-dinitrobenzene compounds mentioned hereinbefore may also be used for the purpose, if desired. If the polymers of the invention are prepared by using a catalyst composition containing as component c) a phosphorus bidentate ligand chosen from the afore-mentioned group (1), then it is preferred to use 1,4-benzoquinone or 1,4-naphthoquinone as component d).

The quantity of component d) present in the catalyst composition is preferably 1-1000 and in particular 5-500 mol per mol of palladium.

The invention will now be illustrated with the aid of the following examples.

### Example 1

A carbon monoxide/cyclopentene copolymer was prepared as follows. A stirred autoclave with a capacity of 300 ml and containing 115 ml of tetrahydrofuran and 50 ml of cyclopentene was charged with a catalyst solution which comprised
10 mmol methanol,
0.061 ml palladium acetate,
0.308 mmol nickel perchlorate,
0.074 mmol 1,3-bis(di-n-butylphosphino)propane, and
3.16 mmol 1,4-naphthoquinone.

After carbon monoxide had been blown in until a pressure of 40 bar was reached, the contents of the autoclave were brought to a temperature of 40 °C. Polymerization was terminated after 60 hours by cooling to room temperature and releasing the pressure. The reaction mixture was stirred into methanol and the copolymer was filtered off, washed with methanol and dried at 50 °C.

7.0 g of copolymer was obtained. The polymerization rate was 9.8 g copolymer/g palladium.hour.

### Example 2

A carbon monoxide/cyclopentene copolymer was prepared substantially in the same way as in Example 1, except for the following differences
a) the autoclave contained 115 ml of methanol instead of 115 ml of tetrahydrofuran and
b) the reaction time was 20 instead of 60 hours.

3.6 g of copolymer was obtained. The polymerization rate was 15.1 g copolymer/g palladium.hour.

### Example 3

A carbon monoxide/cyclopentene copolymer was prepared as follows. A stirred autoclave with a capacity of 250 ml was charged with 30 ml of cyclopentene and 30 ml of methanol. Herein was dissolved a catalyst composition which comprised
0.1 mmol palladium acetate,
0.1 mmol para-toluenesulphonic acid,
3,0 mmol 2,2′-bipyridine, and
27.5 mmol 2,4-dinitrotoluene.

After air present in the autoclave had been removed by evacuation, 40 bar carbon monoxide was blown in. Then, the contents of the autoclave were heated to 70 °C. After 5 hours, polymerization was terminated by cooling to room temperature and releasing the pressure. The reaction mixture was worked up as described in Example 1.

15 g of copolymer was obtained. The polymerization rate was 300 g copolymer/g palladium.hour.

### Example 4

A carbon monoxide/cyclopentene copolymer was prepared substantially in the same way as in Example 3, the difference being that the catalyst composition comprised 3.0 mmol of 1,2-bis(ethylthio) ethane instead of 1,2′-bipyridine.

9.5 g of copolymer was obtained. The polymerization rate was 190 g copolymer/g palladium.hour.

### Example 5

A carbon monoxide/cyclopentene copolymer was prepared substantially in the same way as in Example 3, except for the following differences
a) the catalyst composition comprised 0.15 mmol of 1,3-bis(diphenylphosphino)propane instead of 2,2′-bipyridine, and
b) the reaction temperature was 80 °C instead of 70 °C.

5 g of copolymer was obtained. The polymerization rate was 100 g copolymer/g palladium.hour.

### Example 6

A carbon monoxide/cyclopentene copolymer was prepared substantially in the same way as in Example 3, except for the following differences
a) the catalyst composition comprised 30 mmol of 1,3-dinitrobenzene instead of 2,4-dinitro toluene, and
b) the reaction temperature was 80 °C instead of 70 °C.

14 g of copolymer was obtained. The polymerization rate was 280 g copolymer/g palladium.hour.

### Example 7

A carbon monoxide/cyclopentene copolymer was prepared substantially in the same way as in Example 3, except for the following differences
a) the catalyst composition comprised 30 mmol of 2,6-dinitro toluene instead of 2,4-dinitrotoluene, and
b) the reaction temperature was 80 °C instead of 70 °C.

2.5 g of copolymer was obtained. The polymerization rate was 50 g copolymer/g palladium.hour.

### Example 8

Example 3 was substantially repeated, except for the following differences
a) the catalyst composition comprised 40 mmol of 1,4-benzoquinone instead of 2,4-dinitrotoluene, and
b) the reaction temperature was 80 °C instead of 70 °C.

No polymer was formed.

### Example 9

Example 3 was substantially repeated, except for the following differences
a) the catalyst composition comprised 40 mmol of nitrobenzene instead of 2,4-dinitrotoluene, and
b) the reaction temperature was 60 °C instead of 70 °C.

No polymer was formed.

### Example 10

Example 3 was substantially repeated, except for the following differences
a) the catalyst composition comprised 40 mmol of para-chloronitrobenzene instead of 2,4-dinitrotoluene, and
b) the reaction temperature was 60 °C instead of 70 °C.

No polymer was formed.

### Example 11

Example 3 was substantially repeated, except for the following differences
a) the catalyst composition comprised 30 mmol of 1,2-dinitrobenzene instead of 2,4-dinitrotoluene, and
b) the reaction temperature was 80 °C instead of 70 °C.

No polymer was formed.

### Example 12

Example 3 was substantially repeated, except for the following differences
a) the catalyst composition comprised 3 mmol of 1,2-bis(ethylthio)ethane instead of 2,2′-bipyridine, and 40 mmol of 1,4-benzoquinone instead of 2,4-dinitrotoluene, and
b) the reaction temperature was 60 °C instead of 70 °C.

No polymer was formed.

### Example 13

Example 3 was substantially repeated, except for the following differences
a) the catalyst composition comprised 0.15 mmol of 1,3-bis(diphenylphosphino)propane instead of 2,2′-bipyridine, and 40 mmol of 1,4-benzoquinone instead of 2,4-dinitrotoluene, and
b) the reaction temperature was 60 °C instead of 70 °C.

No polymer was formed.

### Example 14

Example 3 was substantially repeated, except for the following differences
a) the catalyst composition comprised no 2,2′-bipyridine, and
b) the reaction temperature was 80 °C instead of 70 °C.

No polymer was formed.

Of Examples 1-14, Examples 1-7 are examples in accordance with the invention. In Examples 1 and 2, the catalyst compositions employed contained a phosphorus bidentate ligand chosen from group (1) as component c). In Examples 3-7, the catalyst compositions employed contained a bidentate ligand chosen from groups (2)-(4) as component c) and in addition a meta-dinitrobenzene compound as component d). With the aid of ¹³C-NMR analysis it was established that the copolymers prepared according to Examples 1-7 had a linear structure and that the units originating in carbon monoxide and the units originating in cyclopentene occurred in alternating order. Further, it was established that the copolymers prepared according to Examples 1 and 2 had a stereo-regular structure. Finally, it was established with the aid of ¹³C-NMR analysis that in the copolymers prepared according to Examples 1-7 at least 90% of the units originating in cyclopentene were linked to both adjacent units originating in carbon monoxide via their 1- and 3-carbon atoms. The copolymer prepared according to Example 1 displayed a melting range of from 130 to 180 °C. When heated for 1 hour in nitrogen at 320 °C, this copolymer was seen to lose 2% in weight. In a comparative experiment carried out under the same conditions and employing a linear alternating carbon monoxide/ethene copolymer, the loss in weight was 18%.

Examples 8-14 fall outside the scope of the invention and have been included in the patent application for comparison. Examples 8-13 demonstrate that the catalyst compositions containing a nitrogen, sulphur or tetraaryl phosphorus bidentate ligand have insufficient activity for the copolymerization of carbon monoxide with cyclopentene, despite the presence of such compounds as 1,4-benzoquinone, nitrobenzene, para-chloronitrobenzene and 1,2-dinitrobenzene, which have an activity-enhancing effect when the said catalyst compositions are employed in the copolymerization of carbon monoxide with an alpha-olefin.

The meta-dinitrobenzene compounds that are added to the catalyst compositions according to the invention contain two nitrogen atoms which are separated from one another by a bridge formed by three carbon atoms. Example 14 was included to demonstrate that the favourable effect of these compounds cannot be explained from their possible acting as bidentate ligands.

## Claims (Claims for the following Contracting State(s): AT, BE, CH, DE, DK, FR, GB, IT, LI, NL, SE)

1. Copolymers of carbon monoxide with one or more cyclopentenes,
a) which are obtained by polymerization of carbon monoxide with one or more cyclopentenes which are optionally alkyl-substituted in the 3, 4 and/or 5 positions,
b) which have a linear structure, and
c) wherein the units originating from carbon monoxide on the one hand, and the units originating from cyclopentenes on the other hand, occur in alternating order.

2. Polymers as claimed in claim 1, characterized in that if they are based on alkyl-substituted cyclopentenes, the alkyl groups present therein have not more than 4 carbon atoms.

3. Polymers as claimed in claim 1 or 2, characterized in that if they are based on alkyl-substituted cyclopentenes, these contain only one alkyl group.

4. Polymers as claimed in one or more of claims 1-3, characterized in that they are copolymers of carbon monoxide with cyclopentene.

5. Polymers as claimed in claim 4, characterized in that they have a stereo-regular structure.

6. Process for the preparation of polymers as claimed in one or more of claims 1-5, characterized in that the monomers are contacted with a solution of a catalyst composition in a diluent, which catalyst composition is based upon
a) a palladium compound,
b) an anion of an acid with a pKa of less than 2, and
c) either (1) a phosphorus bidentate ligand of the general formula (R³)₂P-R-P(R³)₂, wherein R³ is an optionally polar-substituted aliphatic hydrocarbyl group and R is a bivalent bridging group having at least two carbon atoms in the bridge, or
(2) a phosphorus bidentate ligand of the general formula (R¹)₂P-R-P(R¹)₂, wherein R¹ is an optionally polar-substituted aromatic hydrocarbyl group, or
(3) a sulphur bidentate ligand of the general formula R²S-R-SR², wherein R² is an optionally polar-substituted hydrocarbyl group, or
(4) a nitrogen bidentate ligand of the general formula 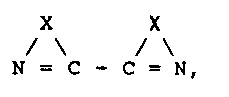 wherein X is an organic bridging group containing three or four atoms in the bridge, at least two of which are carbon atoms,
with the proviso that when a bidentate ligand chosen from the groups (2)-(4) is used as component c), the catalyst composition should in addition include as component d) a compound which contains a benzene ring substituted with at least two nitro groups in a mutual meta position.

7. Process as claimed in claim 6, characterized in that it is carried out at a temperature in the range of from 20 to 120 °C, an overall pressure in the range of from 5 to 150 bar, a molar ratio of the cycloolefins relative to carbon monoxide in the mixture to be polymerized, in the range of from 10:1 to 1:10, and by using such a quantity of catalyst composition as to contain 10⁻⁷ to 10⁻³ mol of palladium per mol of cycloolefin to be polymerized.

8. Process as claimed in claim 6 or 7, characterized in that a catalyst composition is employed which includes as component c) a phosphorus bidentate ligand in which R³ is an alkyl group or in which R¹ is a phenyl group which is optionally substituted in a position ortho to the phosphorus atom with an alkoxy group, such as an ortho-methoxyphenyl group, and the groups R¹ or R³ contain no more than 10 carbon atoms.

9. Process as claimed in claim 8, characterized in that a catalyst composition is employed which includes a phosphorus bidentate ligand in which the bridging group R has three atoms in the bridge at least two of which are carbon atoms, as component c).

10. Process as claimed in claim 6 or 7, characterized in that a catalyst composition is employed which includes a sulphur bidentate in which the bridging group R has only two carbon atoms in the bridge, such as 1,2-bis(ethylthio)ethane, as component c).

11. Process as claimed in claim 6 or 7, characterized in that a catalyst composition is employed which includes 2,2′-bipyridine or 1,10-phenanthroline as component c).

12. Process as claimed in claim 6 or 7, characterized in that a catalyst composition is employed which includes a phosphorus, sulphur or nitrogen bidentate ligand chosen from the groups (2)-(4) as component c) and a compound chosen from 1,3-dinitrobenzene, 2,4-dinitrotoluene and 2,6-dinitrotoluene as component d).

13. Process as claimed in one or more of claims 6-9, characterized in that a catalyst composition is employed which includes a phosphorus bidentate ligand chosen from group (1) as component c) and 1,4-benzoquinone or 1,4-naphthoquinone as component d).

## Claims (Claims for the following Contracting State(s): ES)

1. Process for preparing copolymers of carbon monoxide with one or more cyclopentenes
a) which copolymers have a linear structure, and
b) in which copolymers the units originating from carbon monoxide on the one hand, and the units originating from cyclopentenes on the other hand, occur in alternating order,
comprising polymerizing carbon monoxide with one or more cyclopentenes which are optionally alkyl-substituted in the 3, 4 and/or 5 positions.

2. Process as claimed in claim 1, characterized in that if the copolymers are based on alkyl-substituted cyclopentenes, the alkyl groups present therein have not more than 4 carbon atoms.

3. Process as claimed in claim 1 or 2, characterized in that if the copolymers are based on alkyl-substituted cyclopentenes, these contain only one alkyl group.

4. Process as claimed in one or more of claims 1-3, characterized in that the copolymers are copolymers of carbon monoxide with cyclopentene.

5. Process as claimed in claim 4, characterized in that the copolymers have a stereo-regular structure.

6. Process as claimed in one or more of claims 1-5, characterized in that the copolymerization is effected by contacting the monomers with a solution of a catalyst composition in a diluent, which catalyst composition is based upon
a) a palladium compound,
b) an anion of an acid with a pKa of less than 2, and
c) either (1) a phosphorus bidentate ligand of the general formula (R³)₂P-R-P(R³)₂, wherein R³ is an optionally polar-substituted aliphatic hydrocarbyl group and R is a bivalent bridging group having at least two carbon atoms in the bridge, or
(2) a phosphorus bidentate ligand of the general formula (R¹)₂P-R-P(R¹)₂, wherein R¹ is an optionally polar-substituted aromatic hydrocarbyl group, or
(3) a sulphur bidentate ligand of the general formula R²S-R-SR², wherein R² is an optionally polar-substituted hydrocarbyl group, or
(4) a nitrogen bidentate ligand of the general formula 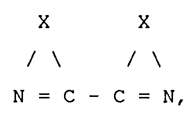 wherein X is an organic bridging group containing three or four atoms in the bridge, at least two of which are carbon atoms, with the proviso that when a bidentate ligand chosen from the groups (2)-(4) is used as component c), the catalyst composition should in addition include as component d) a compound which contains a benzene ring substituted with at least two nitro groups in a mutual meta position.

7. Process as claimed in claim 6, characterized in that it is carried out at a temperature in the range of from 20 to 120 °C, an overall pressure in the range of from 5 to 150 bar, a molar ratio of the cycloolefins relative to carbon monoxide in the mixture to be polymerized, in the range of from 10:1 to 1:10, and by using such a quantity of catalyst composition as to contain 10⁻⁷ to 10⁻³ mol of palladium per mol of cycloolefin to be polymerized.

8. Process as claimed in claim 6 or 7, characterized in that a catalyst composition is employed which includes as component c) a phosphorus bidentate ligand in which R³ is an alkyl group or in which R¹ is a phenyl group which is optionally substituted in a position ortho to the phosphorus atom with an alkoxy group, such as an ortho-methoxyphenyl group, and the groups R¹ or R³ contain no more than 10 carbon atoms.

9. Process as claimed in claim 8, characterized in that a catalyst composition is employed which includes a phosphorus bidentate ligand in which the bridging group R has three atoms in the bridge at least two of which are carbon atoms, as component c).

10. Process as claimed in claim 6 or 7, characterized in that a catalyst composition is employed which includes a sulphur bidentate in which the bridging group R has only two carbon atoms in the bridge, such as 1,2-bis(ethylthio)ethane, as component c).

11. Process as claimed in claim 6 or 7, characterized in that a catalyst composition is employed which includes 2,2'-bipyridine or 1,10-phenanthroline as component c).

12. Process as claimed in claim 6 or 7, characterized in that a catalyst composition is employed which includes a phosphorus, sulphur or nitrogen bidentate ligand chosen from the groups (2)-(4) as component c) and a compound chosen from 1,3-dinitrobenzene, 2,4-dinitrotoluene and 2,6-dinitrotoluene as component d).

13. Process as claimed in one or more of claims 6-9, characterized in that a catalyst composition is employed which includes a phosphorus bidentate ligand chosen from group (1) as component c) and 1,4-benzoquinone or 1,4-naphthoquinone as component d).

## Patentansprüche (Patentansprüche für folgende(n) Vertragsstaat(en): AT, BE, CH, DE, DK, FR, GB, IT, LI, NL, SE)

1. Copolymere aus Kohlenmonoxid und einem oder mehreren Cyclopentenen,
a) die man durch Polymerisation von Kohlenmonoxid mit einem oder mehreren Cyclopentenen, die gegebenfalls in der 3-, 4- und/oder 5-Stellung durch Alkyl substituiert sind, erhält,
b) die eine lineare Struktur besitzen und
c) wobei einerseits die von Kohlenmonoxid stammenden Einheiten und andererseits die von den Cyclopentenen stammenden Einheiten in alternierender Reihenfolge vorliegen.

2. Polymere nach Anspruch 1, dadurch gekennzeichnet, daß, falls sie auf alkylsubstituierten Cyclopentenen basieren, die darin enthaltenen Alkylgruppen nicht mehr als 4 Kohlenstoffatome aufweisen.

3. Polymere nach Anspruch 1 oder 2, dadurch gekennzeichnet, daß sie, falls sie auf alkylsubstituierten Cyclopentenen basieren, nur eine Alkylgruppe aufweisen.

4. Polymere nach einem oder Mehreren der Ansprüche 1-3, dadurch gekennzeichnet, daß es sich hierbei um Copolymere aus Kohlenmonoxid und Cyclopenten handelt.

5. Polymere nach Anspruch 4, dadurch gekennzeichnet, daß sie eine sterisch geordnete Struktur besitzen.

6. Verfahren zur Herstellung von Polymeren nach einem oder mehreren der Ansprüche 1-5, dadurch gekennzeichnet, daß die Monomere mit der Lösung einer Katalysatorzusammensetzung auf der Basis:
a) einer Palladiumverbindung,
b) des Anions einer Säure mit einem pKS-Wert von weniger als 2 und
c) entweder (1) eines zweizähnigen phosphorhaltigen Liganden der allgemeinen Formel (R³)₂P-R-P(R³)₂, worin R³ eine gegebenenfalls polar substituierte aliphatische Kohlenwasserstoffgruppe und R eine zweiwertige Brückengruppe mit mindestens zwei Kohlen stoffatomen in der Brücke ist oder
(2) eines zweizähnigen phosphorhaltigen Liganden der allgemeinen Formel (R¹)₂P-R-P(R¹)₂, worin R¹ eine gegebenenfalls polar substituierte aromatische Kohlenwasserstoffgruppe ist, oder
(3) eines zweizähnigen schwefelhaltigen Liganden der allgemeinen Formel R²S-R-SR², worin R² eine gegebenenfalls polar substituierte Kohlenwasserstoffgruppe ist, oder
(4) eines zweizähnigen stickstoffhaltigen Liganden der allgemeinen Formel 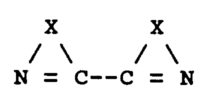 worin X eine organische Brückengruppe mit mindestens drei oder vier Atomen in der Brücke bedeutet, von denen mindestens zwei Kohlenstoffatome sind, in einem Verdünnungsmittel kontaktiert werden, vorausgesetzt, die Katalysatorzusammensetzung enthält, falls ein zweizähniger Ligand aus den Gruppen (2) - (4) als Komponente c) ausgewählt wird, zusätzlich als Komponente (d) noch eine Verbindung, die einen Benzolring, substituiert mit mindestens zwei zueinander metaständigen Nitrogruppen, aufweist.

7. Verfahren nach Anspruch 6, dadurch gekennzeichnet, daß es bei einer Temperatur im Bereich von 20 bis 120°C, einem Gesamtdruck im Bereich von 5 bis 150 bar, einem Molverhältnis von Cycloolefinen zu Kohlenmonoxid in der zu polymerisierenden Mischung von 10:1 bis 1:10 und unter Verwendung solch einer Menge der Katalysatorzusammensetzung, daß pro Mol zu polymerisierendem Cycloolefin 10⁻⁷ bis 10⁻³ Mol Palladium vorliegen durchfeführt wird.

8. Verfahren nach Anspruch 6 oder 7, dadurch gekennzeichnet, daß eine Katalysatorzusammensetzung zum Einsatz kommt, die als Komponente c) einen zweizähnigen phosphorhaltigen Liganden enthält, worin R³ eine Alkylgruppe oder worin R¹ eine gegebenenfalls in ortho-Stellung zum Phosphoratom durch eine Alkoxygruppe substituierte Phenylgruppe wie eine ortho-Methoxyphenylgruppe bedeutet und die Gruppen R¹ und R³ nicht mehr als 10 Kohlenstoffatome aufweisen.

9. Verfahren nach Anspruch 8, dadurch gekennzeichnet, daß eine Katalysatorzusammensetzung zum Einsatz kommt, bei der als Komponente c) ein zweizähniger phosphorhaltiger Ligand mitverwendet wird, worin die Brückengruppe R drei Atome in der Brücke aufweist, von denen mindestens zwei Kohlenstoffatome sind.

10. Verfahren nach Anspruch 6 oder 7, dadurch gekennzeichnet, daß eine Katalysatorzusammensetzung zum Einsatz kommt, bei der als Komponente c) ein zweizähniger schwefelhaltiger mitverwendet wird, worin die Brückengruppe R nur zwei Kohlenstoffatome in der Brücke aufweist, wie z.B. 1,2-Bis(ethylthio)ethan.

11. Verfahren nach Anspruch 6 oder 7, dadurch gekennzeichnet, daß eine Katalysatorzusammensetzung zum Einsatz kommt, bei der als Komponente c) 2,2'-Bipyridin oder 1,10-Phenanthrolin mitverwendet wird.

12. Verfahren nach Anspruch 6 oder 7, dadurch gekennzeichnet, daß eine Katalysatorzusammensetzung zum Einsatz kommt, bei der als Komponente c) ein aus den Gruppen (2) - (4) ausgewählter zweizähniger phosphor-, schwefel- oder stickstoffhaltiger Ligand und als Komponente d) eine aus der Gruppe 1,3-Dinitrobenzol, 2,4-Dinitrotoluol und 2,6-Dinitrotoluol ausgewählte Verbindung mitverwendet werden.

13. Verfahren nach einem oder mehreren der Ansprüche 6-9, dadurch gekennzeichnet, daß eine Katalysatorzusammensetzung zum Einsatz kommt, bei der als Komponente c) ein aus der Gruppe (1) ausgewählter zweizähniger phosphorhaltiger Ligand und als Komponente d) 1,4-Benzochinon oder 1,4-Naphthochinon mitverwendet werden.

## Patentansprüche (Patentansprüche für folgende(n) Vertragsstaat(en): ES)

1. Verfahren zur Herstellung von Copolymeren aus Kohlenmonoxid und einem oder mehreren Cyclopentenen,
a) wobei die Copolymere eine lineare Struktur besitzen und
b) wobei in den Copolymeren einerseits die von Kohlenmonoxid stammenden Einheiten und andererseits die von den Cyclopentenen stammenden Einheiten in alternierender Reihenfolge vorliegen,
das darin besteht, daß man Kohlenmonoxid mit einem oder mehreren Cyclopentenen, die gegebenfalls in der 3-, 4- und/oder 5-Stellung durch Alkyl substituiert sind, polymerisiert.

2. Verfahren nach Anspruch 1, dadurch gekennzeichnet, daß, falls die Copolymere auf alkylsubstituierten Cyclopentenen basieren, die darin enthaltenen Alkylgruppen nicht mehr als 4 Kohlenstoffatome aufweisen.

3. Verfahren nach Anspruch 1 oder 2, dadurch gekennzeichnet, daß die Copolymere, falls sie auf alkylsubstituierten Cyclopentenen basieren, nur eine Alkylgruppe aufweisen.

4. Verfahren nach einem oder mehreren der Ansprüche 1-3, dadurch gekennzeichnet, daß es sich bei den Copolymeren um Copolymere aus Kohlenmonoxid und Cyclopenten handelt.

5. Verfahren nach Anspruch 4, dadurch gekennzeichnet, daß die Copolymere eine sterisch geordnete Struktur besitzen.

6. Verfahren nach einem oder mehreren der Ansprüche 1-5, dadurch gekennzeichnet, daß die Copolymerisation durch Kontaktierung der Monomere mit der Lösung einer Katalysatorzusammensetzung auf der Basis:
a) einer Palladiumverbindung,
b) des Anions einer Säure mit einem pKS-Wert von weniger als 2 und
c) entweder (1) eines zweizähnigen phosphorhaltigen Liganden der allgemeinen Formel (R³)₂P-R-P(R³)₂, worin R³ eine gegebenenfalls polar substituierte aliphatische Kohlenwasserstoffgruppe und R eine zweiwertige Brükengruppe mit mindestens zwei Kohlen stoffatomen in der Brücke ist oder
(2) eines zweizähnigen phosphorhaltigen Liganden der allgemeinen Formel (R¹)₂P-R-P(R¹)₂, worin R¹ eine gegebenfalls polar substituierte aromatische Kohlenwasserstoffgruppe ist, oder
(3) eines zweizähnigen schwefelhaltigen Liganden der allgemeinen Formel R²S-R-SR², worin R² eine gegebenenfalls polar substituierte Kohlenwasserstoffgruppe ist, oder
(4) eines zweizähnigen stickstoffhaltigen Liganden der allgemeinen Formel 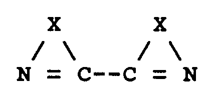 worin X eine organische Brückengruppe mit mindestens drei oder vier Atomen in der Brücke bedeutet, von denen mindestens zwei Kohlenstoffatome sind, in einem Verdünnungsmittel erfolgt, vorausgesetzt, die Katalysatorzusammensetzung enthält, falls ein zweizähniger Ligand aus den Gruppen (2) - (4) als Komponente c) ausgewählt wird, zusätzlich als Komponente (d) noch eine Verbindung, die einen Benzolring, substituiert mit mindestens zwei zueinander metaständigen Nitrogruppen aufweist.

7. Verfahren nach Anspruch 6, dadurch gekennzeichnet, daß es bei einer Temperatur im Bereich von 20 bis 120°C, einem Gesamtdruck im Bereich von 5 bis 150 bar, einem Molverhältnis von Cycloolefinen zu Kohlenmonoxid in der zu polymerisierenden Mischung von 10:1 bis 1:10 und unter Verwendung solch einer Menge der Katalysatorzusammensetzung, daß pro Mol zu polymerisierendem Cycloolefin 10⁻⁷ bis 10⁻³ Mol Palladium vorliegen, durchgeführt wird.

8. Verfahren nach Anspruch 6 oder 7, dadurch gekennzeichnet, daß eine Katalysatorzusammensetzung zum Einsatz kommt, die als Komponente c) einen zweizähnigen phosphorhaltigen Liganden enthält, worin R³ eine Alkylgruppe oder worin R¹ eine gegebenenfalls in ortho-Stellung zum Phosphoratom durch eine Alkoxygruppe substituierte Phenylgruppe wie eine ortho-Methoxyphenylgruppe bedeutet und die Gruppen R¹ und R³ nicht mehr als 10 Kohlenstoffatome aufweisen.

9. Verfahren nach Anspruch 8, dadurch gekennzeichnet, daß eine Katalysatorzusammensetzung zum Einsatz kommt, bei der als Komponente c) ein zweizähniger phosphorhaltiger Ligand mitverwendet wird, worin die Brückengruppe R drei Atome in der Brücke aufweist, von denen mindestens zwei Kohlenstoffatome sind.

10. Verfahren nach Anspruch 6 oder 7, dadurch gekennzeichnet, daß eine Katalysatorzusammensetzung zum Einsatz kommt, bei der als Komponente c) ein zweizähniger schwefelhaltiger mitverwendet wird, worin die Brückengruppe R nur zwei Kohlenstoffatome in der Brücke aufweist, wie z.B. 1,2-Bis(ethylthio)ethan.

11. Verfahren nach Anspruch 6 oder 7, dadurch gekennzeichnet, daß eine Katalysatorzusammensetzung zum Einsatz kommt, bei der als Komponente c) 2,2'-Bipyridin oder 1,10-Phenanthrolin mitverwendet wird.

12. Verfahren nach Anspruch 6 oder 7, dadurch gekennzeichnet, daß eine Katalysatorzusammensetzung zum Einsatz kommt, bei der als Komponente c) ein aus den Gruppen (2) - (4) ausgewählter zweizähniger phosphor-, schwefel- oder stickstoffhaltiger Ligand und als Komponente d) eine aus der Gruppe 1,3-Dinitrobenzol, 2,4-Dinitrotoluol und 2,6-Dinitrotoluol ausgewählte Verbindung mitverwendet werden.

13. Verfahren nach einem oder mehreren der Ansprüche 6-9, dadurch gekennzeichnet, daß eine Katalysatorzusammensetzung zum Einsatz kommt, bei der als Komponente c) ein aus der Gruppe (1) ausgewählter zweizähniger phosphorhaltiger Ligand und als Komponente d) 1,4-Benzochinon oder 1,4-Naphthochinon mitverwendet werden.

## Revendications (Revendications pour l'(les) Etat(s) contractant(s) suivant(s): AT, BE, CH, DE, DK, FR, GB, IT, LI, NL, SE)

1. Copolymères de monoxyde de carbone avec un ou plus d'un cyclopentène :
a) ils sont obtenus par polymérisation du monoxyde de carbone avec un ou plus d'un cyclopentène qui présentent une substitution alkyle éventuelle dans les positions 3,4 et/ou 5,
b) ils présentent une structure linéaire,
c) dans les polymères, les motifs provenant du monoxyde de carbone, d'une part, et les motifs provenant des cyclopentènes, d'autre part, se trouvent en ordre alterné.

2. Polymères tels que revendiqués dans la revendication 1, caractérisé en ce qu'ils sont à base de cyclopentènes à substitution alkyle, les groupes alkyle présents n'ayant pas plus de 4 atomes de carbone.

3. Polymères tels que revendiqués dans la revendication 1 ou 2, caractérisé en ce que, s'ils sont à base de cyclopentène à substitution alkyle, ils contiennent uniquement un groupe alkyle.

4. Polymères tels que revendiqués dans une ou plus d'une des revendications 1 à 3, caractérisés en ce qu'ils sont des polymères de monoxyde de carbone avec du cyclopentène.

5. Procédé tel que revendiqué dans la revendication 4, caractérisé en ce qu'ils ont une structure stéréo-régulière.

6. Procédé pour la préparation de polymères tels que revendiqués dans une ou plus d'une des revendications 1 à 5, caractérisé en ce que les monomères sont mis en contact avec une solution d'une composition catalytique dans un agent diluant,
a) un composé du palladium,
b) un anion d'un acide avec un pKa inférieur à 2, et
c) soit (1) un ligand bidenté au phosphore de la formule générale (R³)₂P-R-P(R³)₂, dans laquelle R³ est un groupe hydrocarbyle aromatique, le cas échéant à substitution polaire, et R est un groupe de pontage, organique bivalent, qui renferme au moins deux atomes de carbone dans le pont.
(2) un ligand bidenté au phosphore de la formule générale (R¹)₂-P-R-P(R¹)₂, dans laquelle R¹ est un groupe hydrocarbyle aromatique à substitution polaire éventuelle ou
(3) un ligand bidenté au soufre de la formule générale R²S-S-SR², dans laquelle R² est un groupe hydrocarbyle à substitution polaire éventuelle, ou bien
(4) un ligand bidenté à l'azote de la formule générale 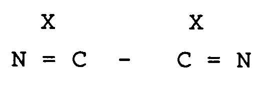 dans laquelle X est un groupe organique de pontage, qui renferme trois ou quatre atomes dans le pont, dont au moins deux sont des atomes de carbone sous la condition que, lorsqu'un ligand bidenté choisi dans les groupes (2)-(4) est utilisé en tant que composant c), la composition catalytique devra renfermer, en outre, comme composant d) un composé qui présente un noyau benzénique substitué par au moins deux groupes nitro en une position méta, l'un par rapport à l'autre.

7. Procédé tel que revendiqué dans la revendication 6, caractérisé en ce qu'il est mis en oeuvre à une température dans la gamme de 20 à 120°C sous une pression globale dans la gamme de 5 à 150 bars, avec un rapport molaire des cyclooléfines par rapport au monoxyde de carbone dans le mélange devant être polymérisé, dans la gamme de 10:1 à 1:10, et en utilisant une quantité de composition catalytique telle qu'elle renferme de 10⁻⁷ à 10⁻³ mole de palladium par mole de cyclooléfine devant être polymérisée.

8. Procédé tel que revendiqué dans la revendication 6 ou 7, caractérisé en ce qu'est utilisée une composition catalytique qui comporte comme composant c) un ligand bidenté au phosphore dans lequel R³ est un groupe alkyle ou dans lequel R¹ est un groupe phényle qui est substitué, le cas échéant, en une position ortho par rapport à l'atome de phosphore avec un groupe alcoxy, tel qu'un groupe ortho-méthoxyphényle, et les groupes R¹ ou R³ ne renferment pas plus que 10 atomes de carbone.

9. Procédé tel que revendiqué dans la revendication 8, caractérisé en ce qu'est utilisée une composition catalytique qui comporte un ligand bidenté au phosphore dans lequel le groupe de pontage R possède trois atomes dans le pont dont au moins deux sont des atomes de carbone, en tant que composant c).

10. Procédé tel que revendiqué dans la revendication 6 ou 7, caractérisé en ce qu'est utilisée une composition catalytique qui comporte un ligand bidenté au soufre dans lequel le groupe de pontage R possède uniquement deux atomes de carbone dans le pont, tel que le 1,2-bis(éthylthio)éthane, en tant que composant c).

11. Procédé tel que revendiqué dans la revendication 6 ou 7, caractérisé en qu'est utilisée une composition catalytique qui comporte de la 2,2'-bipyridine ou de la 1,10-phénanthroline en tant que composant c).

12. Procédé tel que revendiqué dans la revendication 6 ou 7, caractérisé en ce qu'est utilisée une composition catalytique qui comporte un ligand bidenté au phosphore, au soufre ou à l'azote, choisi dans les groupes (2)-(4) en tant que composant c) et un composé choisi parmi le 1,3-dinitrobenzène, le 2,4-dinitrotoluène et 2,6-dinitrotoluène en tant que composant d).

13. Procédé tel que revendiqué dans une ou plus d'une des revendications 6 à 9, caractérisé en ce qu'est utilisée une composition catalytique qui comporte un ligand bidenté au phosphore choisi dans le groupe (1) en tant que composant c) et de la 1,4-benzoquinone ou de la 1,4-naphtoquinone en tant que composant d).

## Revendications (Revendications pour l'(les) Etat(s) contractant(s) suivant(s): ES)

1. Procédé pour préparer des copolymères de monoxyde de carbone avec un ou plus d'un cyclopentène
a) ces copolymères ayant une structure linéaire,
b) copolymères dans lesquels les motifs provenant du monoxyde de carbone d'une part, et les motifs provenant des cyclopentènes, d'autre part, se trouvent en ordre alterné, procédé selon lequel on polymérise du monoxyde de carbone avec un ou plus d'un cyclopentène qui sont substitués, le cas échéant par un alkyle en position 3, 4 et/ou 5.

2. Procédé tel que revendication dans la revendication 1, caractérisé en ce qu'ils sont à base de cyclopentènes à substitution alkyle, les groupes alkyle présents n'ayant pas plus de 4 atomes de carbone.

3. Procédé tel que revendiqué dans la revendication 1 ou 2, caractérisé en ce que, s'ils sont à base de cyclopentène à substitution alkyle, ils contiennent uniquement un groupe alkyle.

4. Procédé tel que revendiqué dans une ou plus d'une des revendications 1 à 3, caractérisés en ce qu'ils sont des polymères de monoxyde de carbone avec du cyclopentène.

5. Procédé tel que revendiqué dans la revendication 4, caractérisé en ce qu'ils ont une structure stéréo-régulière.

6. Procédé tel que revendiqué dans une ou plus d'une des revendications 1 à 5, caractérisé en ce que la copolymérisation est réalisée en mettant en contact les monomères avec une solution d'une composition catalytique dans un agent diluant, cette composition catalytique est basée sur
a) un composé du palladium,
b) un anion d'un acide avec un pKa inférieur à 2, et
c) soit (1) un ligand bidenté au phosphore de la formule générale (R³)₂P-R-P(R³)₂, dans laquelle R³ est un groupe hydrocarbyle aromatique, le cas échéant à substitution polaire, et R est un groupe de pontage, organique bivalent, qui renferme au moins deux atomes de carbone dans le pont.
(2) un ligand bidenté au phosphore de la formule générale (R¹)₂-P-R-P(R¹)₂, dans laquelle R¹ est un groupe hydrocarbyle aromatique à substitution polaire éventuelle ou
(3) un ligand bidenté au soufre de la formule générale R²S-S-SR², dans laquelle R² est un groupe hydrocarbyle à substitution polaire éventuelle, ou bien
(4) un ligand bidenté à l'azote de la formule générale 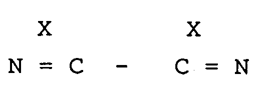 dans laquelle X est un groupe organique de pontage, qui renferme trois ou quatre atomes dans le pont, dont au moins deux sont des atomes de carbone sous la condition que, lorsqu'un ligand bidenté choisi dans les groupes (2)-(4) est utilisé en tant que composant c), la composition catalytique devra renfermer, en outre, comme composant d) un composé qui présente un noyau benzénique substitué par au moins deux groupes nitro en une position méta, l'un par rapport à l'autre.

7. Procédé tel que revendiqué dans la revendication 6, caractérisé en ce qu'il est mis en oeuvre à une température dans la gamme de 20 à 120°C sous une pression globale dans la gamme de 5 à 150 bars, avec un rapport molaire des cyclooléfines par rapport au monoxyde de carbone dans le mélange devant être polymérisé, dans la gamme de 10:1 à 1:10, et en utilisant une quantité de composition catalytique telle qu'elle renferme de 10⁻⁷ à 10⁻³ mole de palladium par mole de cyclooléfine devant être polymérisée.

8. Procédé tel que revendiqué dans la revendication 6 ou 7, caractérisé en ce qu'est utilisée une composition catalytique qui comporte comme composant c) un ligand bidenté au phosphore dans lequel R³ est un groupe alkyle ou dans lequel R¹ est un groupe phényle qui est substitué, le cas échéant, en une position ortho par rapport à l'atome de phosphore avec un groupe alcoxy, tel qu'un groupe ortho-méthoxyphényle, et les groupes R¹ ou R³ ne renferment pas plus que 10 atomes de carbone.

9. Procédé tel que revendiqué dans la revendication 8, caractérisé en ce qu'est utilisée une composition catalytique qui comporte un ligand bidenté au phosphore dans lequel le groupe de pontage R possède trois atomes dans le pont dont au moins deux sont des atomes de carbone, en tant que composant c).

10. Procédé tel que revendiqué dans la revendication 6 ou 7, caractérisé en ce qu'est utilisée une composition catalytique qui comporte un ligand bidenté au soufre dans lequel le groupe de pontage R possède uniquement deux atomes de carbone dans le pont, tel que le 1,2-bis(éthylthio)éthane, en tant que composant c).

11. Procédé tel que revendiqué dans la revendication 6 ou 7, caractérisé en qu'est utilisée une composition catalytique qui comporte de la 2,2'-bipyridine ou de la 1,10-phénanthroline en tant que composant c).

12. Procédé tel que revendiqué dans la revendication 6 ou 7, caractérisé en ce qu'est utilisée une composition catalytique qui comporte un ligand bidenté au phosphore, au soufre ou à l'azote, choisi dans les groupes (2)-(4) en tant que composant c) et un composé choisi parmi le 1,3-dinitrobenzène, le 2,4-dinitrotoluène et 2,6-dinitrotoluène en tant que composant d).

13. Procédé tel que revendiqué dans une ou plus d'une des revendications 6 à 9, caractérisé en ce qu'est utilisée une composition catalytique qui comporte un ligand bidenté au phosphore choisi dans le groupe (1) en tant que composant c) et de la 1,4-benzoquinone ou de la 1,4-naphtoquinone en tant que composant d).
